# EUROPEAN PATENT SPECIFICATION

(11) **EP 3 386 092 B1**
(45) Date of publication and mention of the grant of the patent: **08.04.2020**
(21) Application number: 18163416.3
(22) Date of filing: 22.03.2018
(51) Int. Cl.: H02N 11/00, H01T 23/00

(54) **DEVICE FOR ACCUMULATING ELECTROMAGNETIC ENERGY AND GENERATING IONIZING ENERGY**
VORRICHTUNG ZUM SPEICHERN ELEKTROMAGNETISCHER ENERGIE UND GENERIERENDEN IONISIERENDEN ENERGIEN
DISPOSITIF D'ACCUMULATION D'ÉNERGIE ÉLECTROMAGNÉTIQUE ET GÉNÉRATION D'ÉNERGIE IONISANTE

(30) Priority: 06.04.2017 IT 201700037750
(43) Date of publication of application: 10.10.2018
(73) Proprietor: Candiago, Maria Augusta, 31028 Vazzola (TV) (IT); Soligon, Franco, 31028 Vazzola (TV) (IT)
(72) Inventor: SOLIGON, Franco, 31028 Vazzola TV (IT)
(74) Representative: Modiano, Micaela Nadia

(56) References cited:
- EP-B1- 2 186 175
- JP-A- 2007 048 539

## Description

The present invention relates to a device for accumulating electromagnetic energy and generating ionizing energy, which makes it possible to achieve a potentization of fluids and the depollution of air, water and other contaminated groundmasses.

The term 'geomagnetism' generally means the magnetic activity of the Earth, and the set of magnetic phenomena related to the Earth.

Geobiology is the discipline that investigates the properties of the natural electromagnetic field and the natural or artificial causes of its disturbance, by studying its interactions with organisms and with the environment.

Currently it is known that our planet behaves like a magnet that emits its own electromagnetic field, which interacts with greater fields, commonly known as "cosmic" fields, which originate from the ionosphere and from outer space.

The interaction of such forces constitutes the natural electromagnetic field, to which living organisms have adapted in the course of evolution, and to which they are still subjected today.

It has been shown that the action of the natural electromagnetic field has a positive influence on the electrical exchanges that regulate cellular processes, and it is considered a regulating factor in our biorhythms.

All biological processes are in fact regulated by electrical exchanges, with variable-rhythm oscillations, which are characterized by particular frequencies.

Experimentation has shown that cells, stressed by vibrations, tend toward isochronism (i.e. to "vibrate together"), from which it has been deduced that electromagnetic fields of very different type, intensity, and frequencies from those existing in nature influence normal biological processes, altering them and thus leading to a condition of stress represented as "electric disorder" within the cells.

Excessive and prolonged exposure to artificial fields induces internal electrical currents in the exposed body. These currents have varying intensity according to the type of source and they subject the organisms to stresses with a frequency that is abnormal with respect to biological frequencies.

According to research in progress, continuous alteration of the natural electrical field by means of artificial pulses is the source of anomalous cellular behaviors, which can lead to disorders of the nervous and endocrine systems, immunosuppressive effects and forms of cancer, and in general exposure to artificial electromagnetic fields is to be considered harmful for the same reason that, conversely, the radiation of the natural electromagnetic field is considered biologically useful.

According to geobiology, the electromagnetic flows exiting from the body of the Earth enfold the entire planet in a uniform grid constituted by lines and nodes at which such lines intersect, and the alteration of such natural electromagnetic field, better known as "electromagnetic pollution", distorts this grid, depriving living beings, both in the plant kingdom and in the animal kingdom (including humans), of the correct amount of electromagnetic energy.

Power generation stations, substations and transformer cabinets, and electricity transmission and distribution lines, with particular reference to overhead high voltage lines, radio and television stations, antennae, transceivers, amateur radio systems and all similar or equivalent apparatuses must all be considered causes of electromagnetic pollution.

As is known, the operation of electrical household appliances (televisions, computers, rheostats, electrical household appliances etc.) contributes to electromagnetic pollution, which gives rise to electrostatic fields and the production of positive ions.

The very lines of the domestic appliance (in particular in appliances in which the supply lines form closed rings) generate electrostatic fields caused by any potential difference between the wires and electromagnetic fields generated by the flow of current.

The internal electrical climate is also influenced by numerous other elements that contribute to creating static electricity in the air and to reducing the concentration of negative ions: synthetic finishes and fabrics, fitted carpets, and air conditioning.

Electromagnetic pollution can cause alterations to cellular exchanges, cellular damage that can degenerate into forms of cancer and leukemia, and physiological and behavioral disorders (fatigue, circulatory disorders, nervousness, insomnia, depression) which have generally been dismissed as unimportant because they are believed to be mostly transient.

To such electromagnetic pollution must be added the "normal" artificial pollution caused by car exhausts, by emissions from dwellings, industry etc.

Such pollution particularly affects the air, water and soil.

It is thought that in the past, the terrestrial electromagnetic field was able to "clean" itself of pollutants autonomously and naturally, by virtue of the presence in the atmosphere of a sufficient quantity of ionized particles to ensure the abatement to the ground of all pollutant molecules in suspension.

The current weakening of the terrestrial electromagnetic field described above entails that nowadays, especially in urban environments and in industrial zones, it is no longer capable of fully achieving air, water and soil purification.

In the known art there is EP 2,186,175 in which the first claim relates to a device for accumulating electromagnetic energy and generating ionizing energy, which is characterized in that it comprises, inside a protective box-like containment body, means for receiving and amplifying electromagnetic energy, above said means for receiving and amplifying and associated therewith there being means of accumulating the energy that rises from the underlying receiving and amplifying means, said means for accumulating being connected to means for converting the electromagnetic energy to ionizing energy, these last means comprising emitter means for releasing said generated ionizing energy outside the box-like body.

Such solution substantially presents the drawback that it is structurally complex and made with components that offer a low level of optimization which reduces its functionality.

Furthermore the known device offers low power and a low concentration of ionization.

The aim of the present invention is to provide a device for generating ionizing energy which offers a simpler receiving structure that makes it possible to achieve a general improvement and optimization of all the structures that compose it so as to make it possible to produce an ionizing energy that makes it possible to arrive at an optimal potentization of the fluids and at the depollution of air, water and other contaminated groundmasses.

Within this aim, an object of the present invention is to provide a device that offers an increase in capability with respect to the known art and which at the same time makes it possible to concentrate the ionization.

Another object is to obtain a device that makes it possible to increase the ionizing and potentizing capacity, thus achieving results both in the field of ionization of water for consumption and use in the plant, animal and human kingdoms and also in the depollution of air, water, soil and other groundmasses.

Another object is to provide a device that makes it possible to increase the antioxidant capacity of water, thus preventing pathogenic diseases and funguses and reducing the use of medicines and anti-parasitic treatments.

A further object of the present invention is to provide a device that can be used to improve the quality of the air and also of the water and of the soil and of other contaminated groundmasses in the areas in which it is positioned.

Another object is to provide a device that, in addition to the foregoing characteristics, also adds that of precipitating calcium bicarbonate, thus reducing the formation of encrustations in pipes.

A still further object of the present invention is to provide a device for generating ionizing energy, which can be produced using known systems and technologies.

This aim and these and other objects which will become better apparent hereinafter are achieved by a device for accumulating electromagnetic energy and generating ionizing energy, which is provided with a box-like body for the containment and protection of receiving means and electromagnetic energy amplifying means, means for accumulating the energy that rises from said underlying receiving means and amplifying means being present above said receiving means and said amplifying means and being associated therewith, said accumulation means being connected to means for converting the electromagnetic energy to ionizing energy which are adapted to release outside said box-like body said generated ionizing energy, characterized in that said receiving means comprise a chamber of first disks which is arranged at the base of said enclosure and in that it is provided with means for conveying said ionizing energy, which comprise at least one tube, which is outside said enclosure and inside which fluids to be processed pass, said means for conveying said ionizing energy being connected to said enclosure by way of a cable, said enclosure comprising a lens which lies above said amplifying means.

Further characteristics and advantages of the invention will become better apparent from the description of two preferred but not exclusive embodiments thereof, which are illustrate by way of non-limiting example in the accompanying drawings wherein:

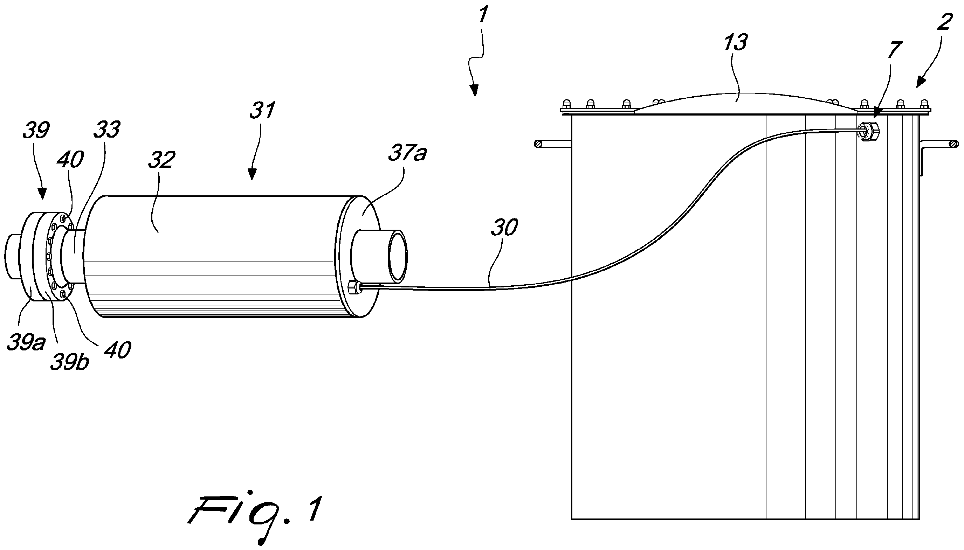

Figure 1 shows the device for accumulating and generating ionizing energy and the tube for conveying the ionizing energy, according to the present invention;

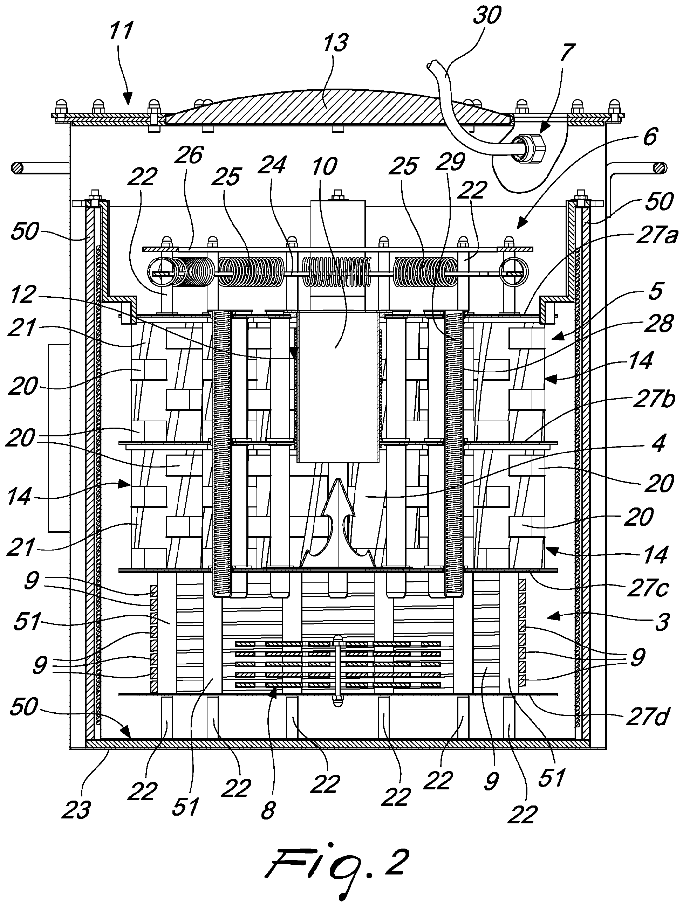

Figure 2 is a cross-sectional view of the interior of the enclosure of the device for accumulating and generating ionizing energy;

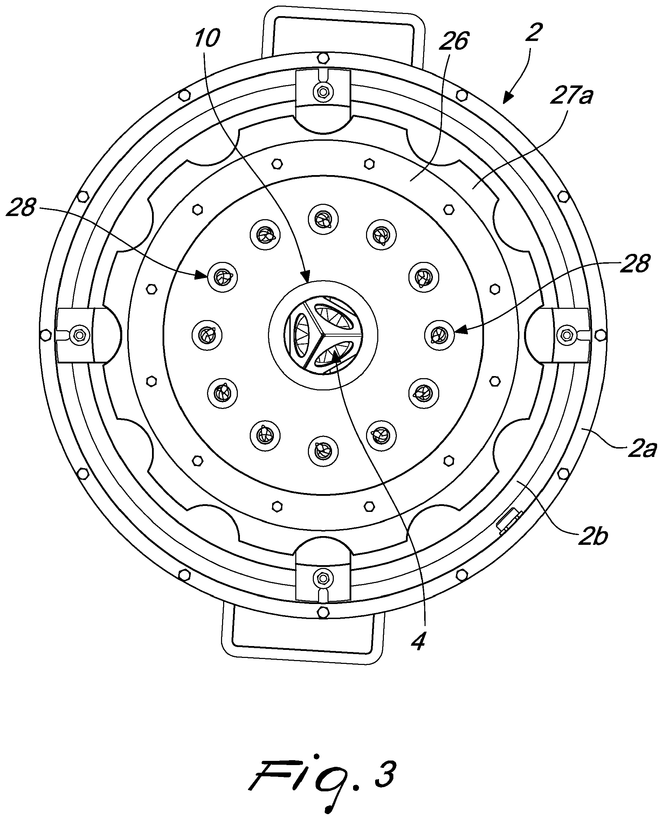

Figure 3 is a view from above of the device for accumulating and generating ionizing energy;

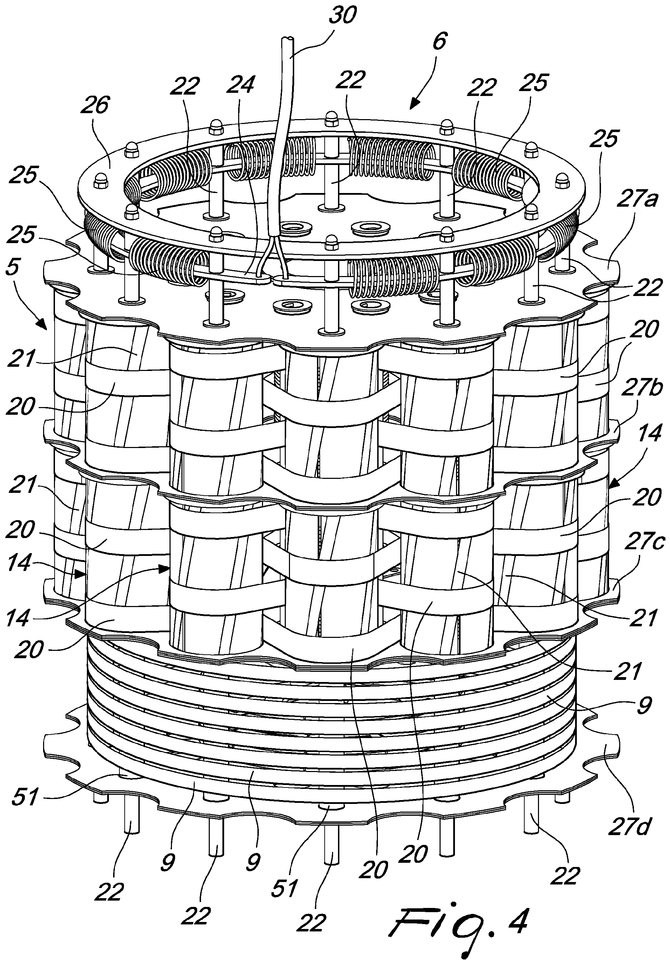

Figure 4 is a perspective view of the components arranged inside the enclosure;

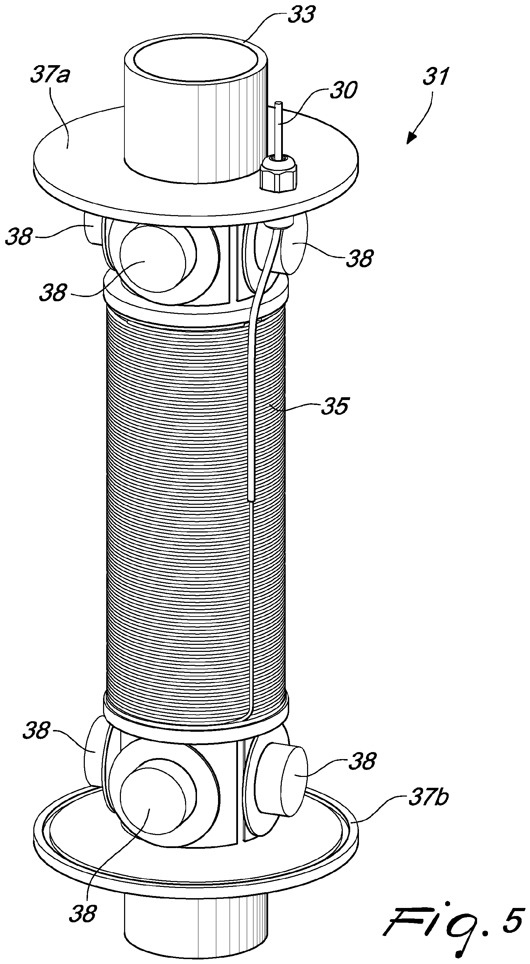

Figure 5 shows the interior of the tube for conveying the ionizing energy;

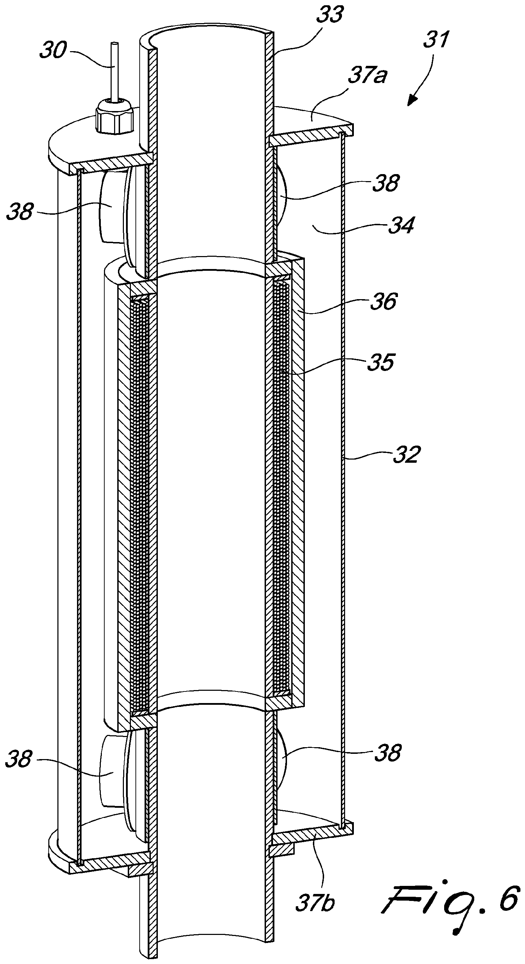

Figure 6 is a cross-sectional view of the tube in the previous figure;

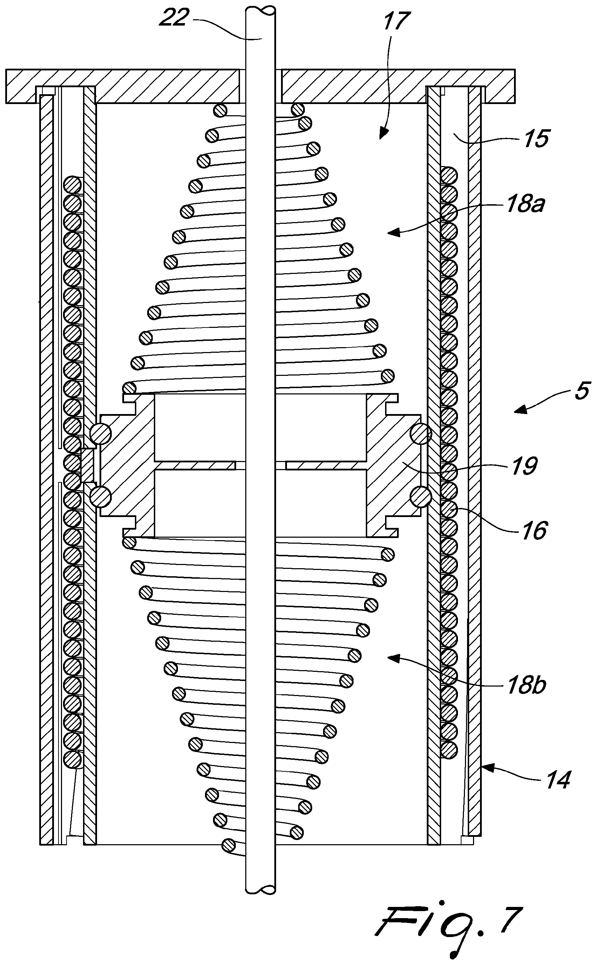

Figure 7 is a cross-sectional view of a means for accumulating energy;
Figure 8 is an exploded cross-sectional view of a flange for conveying the ionizing energy;
Figure 9 shows the perforated partition present inside the flange.

With reference to the figures, a device for accumulating electromagnetic energy and generating ionizing energy according to the invention is generally designated, in the specific embodiment shown, with the reference numeral 1.

Such device 1 comprises a box-like body 2, advantageously constituted by a double cylindrical enclosure that defines an outer wall 2a and an inner wall 2b, which is adapted to contain and to protect means 3 of receiving, means 4 of amplifying, means 5 of accumulating electromagnetic energy and means 6 of converting the electromagnetic energy to ionizing energy, all arranged internally thereto.

Above the receiving means 3 and the amplifying means 4, and associated therewith, are the means 5 of accumulating the energy that rises from the underlying means 3 of receiving and means 4 of amplifying.

Such accumulating means 5 are connected to the means 6 of converting the electromagnetic energy to ionizing energy, these last comprising emitter means 7 for releasing the generated ionizing energy outside the box-like body 2.

The receiving means 3 comprise a chamber which is composed of a plurality of first disks 8, which are mutually superimposed and stacked, the function of which is to amplify the energy originating from the amplifying means 4 which comprise a tetrahedral amplifier chamber which contains an amplifier element, such as a rock, a crystal or other, similar element, designed to reflect and amplify the incoming energy.

The tetrahedral amplifier chamber can be made of various materials, preferably made of silver, and it is above the first disks 8.

There is a chosen number of first disks 8 and, in the specific embodiment shown, this number can be comprised between one and twenty; they can be made of various materials and have chosen dimensions.

The first disks 8 are wrapped by a series of spirals 9, each one made with a flat copper strip of dimensions preferably 8 mm x 0.15 mm thickness.

The amplifying means 4 receive the electromagnetic flow by way of an overlying central cylindrical channel 10, from which the electromagnetic flow enters, passing through a cover 11 which is arranged above to close the enclosure 2.

The central cylindrical channel 10 is preferably made of copper and is wrapped by a spiral 12, also made of copper, of diameter preferably comprised between one and three mm with compact wrapping that covers the entire outer surface of the central cylindrical channel 10.

The cover 11 is preferably made of plastic material, and in particular it is preferably transparent; it comprises a lens 13, advantageously having a circular plan shape with a diameter, in the specific embodiment shown, preferably of 253 cm, arranged in a region that lies above the amplifying means 4.

The lens 13 therefore concentrates the photons and channels them, through the underlying central cylindrical channel 10, at the amplifying means 4.

The energy amplified by the amplifying means 4 is conveyed to the accumulating means 5 which concentrate the natural electromagnetic energy rising.

The accumulating means 5 are constituted by a plurality of tubular bodies 14, preferably made of steel and, in the specific embodiment shown, comprised preferably between four and twenty-four in number; they are arranged mutually laterally adjacent, preferably on two levels, one overlying the other.

Each tubular body 14 is composed of a two-chamber external enclosure which is adapted to define thus a first internal seat 15 for a copper wire 16 wound thereat for almost the entire height of said first seat 15.

Each tubular body 14 has a second axial seat 17 for a double conical spiral 18a, 18b made of copper.

The conical spirals 18a, 18b are arranged mutually opposite and are divided by a spacer 19.

Each one of the tubular bodies 14 is intersected externally by a flat copper strip 20, which is preferably of dimensions 15 mm x 0.15 mm thickness.

Also outside each one of the tubular bodies 14 there is a flat copper strip 21, preferably of width comprised between four and six mm and thickness of 0.15 mm, which is arranged at an angle with respect to the tubular bodies 14.

The flat copper strips 20 and 21 make it possible to accumulate a larger quantity of ionizing energy.

The energy is then conveyed from the accumulating means 5 to the conversion means 6 via adapted threaded bars 22 which rest in a downward region on a layer of lead 50 which rests on the bottom 23 of the enclosure 2 and extend up to the conversion means 6.

Advantageously the spirals 9 rest on ducts 51 that envelop the bars 22.

The layer of lead 50 extends from the bottom 23 of the enclosure 2 upward so as to wrap completely around the receiving means 3, the amplifying means 4, the accumulating means 5 and the conversion means 6, stopping below the lens 13.

The bars 22 also pass axially with respect to the conversion means 6 which are constituted by an open ring 24, made of a chosen material, preferably steel, on which between four and twelve copper spirals 25 are inserted coaxially.

The bars 22 are blended, above the open ring 24, by a metallic annular structure 26.

The conversion means 6 and the amplifying means 4 and the accumulating means 5 are mutually separated by adapted second circular disks 27a, 27b and 27c, which are preferably made of metal.

The receiving means 3 rest on a further second disk 27d, which is similar to the preceding ones, and thus they are kept spaced apart from the bottom 23 of the enclosure 2; all of the second disks 27a, 27b, 27c and 27d are perforated in order to allow the passage of the bars 22.

The device 1 further comprises tubular posts or channels 28 which in the specific embodiment shown are twelve in number and are arranged coaxially to the central cylindrical channel 10 on a circumference which is internal to the one on which the open ring 24 and the metallic annular structure 26 lie.

Such tubular posts or channels 28 have an extension that is sufficient to blend them with the second disks 27a, 27b, 27c, each one of them being wrapped by a further spiral 29 made of copper.

An electrical cable 30, for example an RG58 cable, is connected to the ends of the open ring 24 for the release outside the box-like body 2 of the generated ionizing energy at means 31 of conveying that ionizing energy, which are constituted by a cylindrical amplifier element or tube 32, made of various materials, preferably of steel, axially to which there is a duct 33 which is adapted to allow for example the passage of fluids or liquids and is made of the chosen material, such as for example steel of varying diameter from half an inch to around ten inches.

The cable 30 is obtained by joining two wires, each one connected to an end of the open ring 24.

A connector contributes to constituting said emitter means 7 and is advantageously associated, at the box-like body 2, proximate to the cover 11, with which a rapid coupling for the cable 30 can conveniently be associated.

Between the amplifier element 32 and the duct 33 there is a chamber 34 for transferring the ionizing energy.

From one to twenty, preferably five, windings 35 are arranged outside the duct 33 and are made of copper wire, of diameter preferably 1.6 mm, and the terminal thereof is soldered to the RG58 cable 33.

Such windings 35 only partially affect the length of the chamber 34 and are covered by an insulating layer of lead 36 which wraps around them completely.

In the space that lies between the domes 37a and 37b for closing the chamber 34 there are magnets 38, the number of which can vary on the basis of the diameter of the duct 33.

Multiple amplifier elements 32 can be mounted in series in order to facilitate a greater transfer of the ionizing energy.

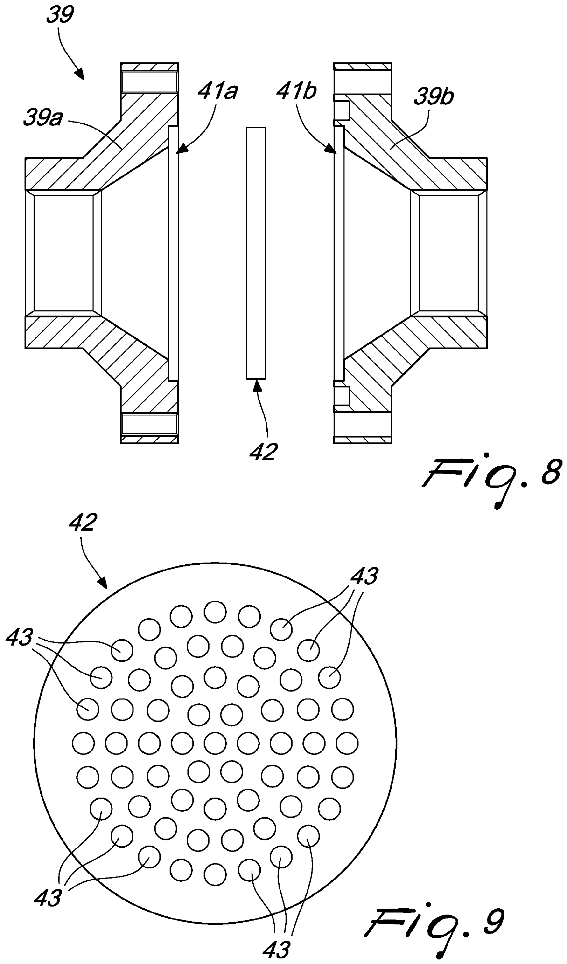

Figures 8 and 9 also show other means 31 which are constituted by a flange 39 which is arranged for example in a cascade arrangement with respect to the duct 33 of the amplifier element or tube 32.

Such flange is composed of two bodies 39a and 39b, which can be fastened to each other by means of adapted screws or bolts 40, and each of which is provided internally with a seat 41a, 41b, preferably circular in plan view, for a partition 42 which is preferably made of plastic material such as polymethylmethacrylate, known by the Plexiglass trademark.

Such partition 42 has a plurality of holes 43 and is subjected to a series of suitable vibration frequencies (see for example the theory of Mr. Masaru Emoto) which are generated quantistically, the aim of which is to make it possible to achieve for example a particular anti-parasite treatment or to prevent fungal diseases on soils or plants.

In practice it has been found that the invention thus described provides a solution to the intended aim and objects.

In particular, by way of measurements performed with the Bovis biometer, it has been verified that the device is much more powerful with respect to the known art, and it is capable of vitalizing and ionizing some tens of times more than what is possible with the known art.

The device has a simpler receiving structure that therefore makes it possible to achieve a general improvement and optimization of all the structures that go to make it up so as to make it possible to produce a greater ionizing energy that in turn makes it possible to arrive at an optimal potentization of the fluids and at the depollution of air, water and other contaminated groundmasses.

The device, by increasing the ionizing and potentizing capacity, achieves optimal results both in the field of ionization of water for consumption and use in the plant, animal and human kingdoms and also in the depollution of air, water, soil and other groundmasses.

At the same time an increase has been found in the antioxidant capacity of water, which makes it possible to prevent pathogenic diseases and funguses and reduces the use of medicines and anti-parasitic treatments.

Finally the device can be used to improve the quality of the air and also of the water and of the soil and of other contaminated groundmasses in the areas in which it is positioned, and it also makes it possible to precipitate calcium bicarbonate, thus reducing the formation of encrustations in pipes.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the dimensions, may be any according to requirements and to the state of the art.

The disclosures in Italian Patent Application No. 102017000037750 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (1) for accumulating electromagnetic energy and generating ionizing energy, which is provided with a box-like containment and protection enclosure (2) comprising receiving means (3) and electromagnetic energy amplifying means (4), means (5) of accumulating the energy that rises from said underlying receiving means (3) and amplifying means (4) being present above said receiving means (3) and said amplifying means (4) and being associated therewith, said accumulation means (5) being connected to means (6) of converting the electromagnetic energy to ionizing energy which are adapted to release outside said box-like enclosure (2) said generated ionizing energy, **characterized in that** said receiving means (3) comprise a chamber of first disks (8) which is arranged at the base of said enclosure (2) and **in that** it is provided with means (31) of conveying said ionizing energy, which comprise at least one tube (32), which is outside said enclosure (2) and inside which fluids to be processed pass, said means (31) of conveying said ionizing energy being connected to said enclosure (2) by way of a cable (30), said enclosure (2) comprising a lens (13) which lies above said amplifying means (4).

2. The device (1) according to claim 1, **characterized in that** said receiving means (3) are arranged below said amplifying means (4) and are constituted by a chamber composed of a plurality of first disks (8), which are mutually superimposed and stacked, said first disks (8) being wrapped by a series of spirals (9), each one provided by way of a flat copper strip, said spirals (9) resting on ducts (51).

3. The device (1) according to one or more of the preceding claims, **characterized in that** said amplifying means (4) comprise a tetrahedral amplifier chamber which contains an amplifier element designed to reflect and amplify the incoming energy.

4. The device (1) according to one or more of the preceding claims, **characterized in that** a central cylindrical channel (10) made of copper and wrapped by a spiral (12), also made of copper, with a compact wrapping that covers the entire outer surface of said central cylindrical channel (10) is arranged above said amplifying means (4).

5. The device (1) according to one or more of the preceding claims, **characterized in that** said enclosure (2) is closed by a cover (11) made of transparent plastic material and comprising a lens (13) which is arranged in a region that lies above said amplifying means (4), said lens (13) concentrating the photons and channeling them, through said underlying central cylindrical channel (10), at said amplifying means (4) so that the energy amplified by them is conveyed to said means (5).

6. The device (1) according to one or more of the preceding claims, **characterized in that** said accumulation means (5) are constituted by a plurality of tubular bodies (14) made of steel, which are arranged mutually side by side and on one or more mutually overlying planes, each one of said tubular bodies (14) being composed of a two-chamber external enclosure, which is adapted to form a first internal seat (15) for a copper wire (16) wound thereat for almost the entire height of said first seat (15), each one of said tubular bodies (14) having a second axial seat (17) for a double conical spiral (18a, 18b) made of copper, which are arranged mutually opposite and are divided by a spacer (19), said tubular bodies (14) being intersected externally by a flat copper strip (20), outside each one of said tubular bodies (14) there being a flat copper strip (21) arranged at an angle with respect to said tubular bodies (14), said flat copper strips (20 and 21) making it possible to accumulate a larger quantity of ionizing energy.

7. The device (1) according to one or more of the preceding claims, **characterized in that** the energy is conveyed from said accumulation means (5) to said conversion means (6) via adapted threaded bars (22) which rest in a downward region on a layer of lead (50) which rests on the bottom (23) of said enclosure (2) and extend up to said conversion means (6), said ducts (51) being wrapped by said series of spirals (9), said layer of lead (50) extending from said bottom (23) upward so as to wrap completely around said receiving means (3), said amplifying means (4), said accumulation means (5) and said conversion means (6), stopping below said lens (13).

8. The device (1) according to one or more of the preceding claims, **characterized in that** said conversion means (6) are constituted by an open ring (24) on which copper spirals (25) are inserted coaxially and are blended, above said open ring (24), by a metallic annular structure (26), said conversion means (6), said amplifying means (4) and said accumulation means (5) being mutually separated by adapted second circular disks (27a, 27b, 27c), said receiving means (3) resting on a further second disk (27d), which is similar to the preceding ones, and thus being kept spaced apart from said bottom (23), all of said second disks (27a, 27b, 27c, 27d) being perforated in order to allow the passage of said bars (22).

9. The device (1) according to one or more of the preceding claims, **characterized in that** it comprises tubular posts or channels (28), which are arranged coaxially to said central cylindrical channel (10) on a circumference which is internal to the one on which said open ring (24) and said metallic annular structure (26) lie, said tubular posts or channels (28) having an extension that is sufficient to blend them with said second disks (27a, 27b, 27c), each one of them being wrapped by a further spiral (29) made of copper.

10. The device (1) according to one or more of the preceding claims, **characterized in that** an electrical cable (30) is connected to the ends of said open ring (24) for the release outside said box-like enclosure (2) of the generated ionizing energy at means (31) of conveying said ionizing energy, which are constituted by an amplifier element or tube (32) which is cylindrical and axially to which there is a duct (33) which is adapted to allow the passage of fluids or liquids, said cable (30) being obtained by joining two wires, each one connected to an end of said open ring (24).

11. The device (1) according to one or more of the preceding claims, **characterized in that** between said amplifier element (32) and said duct (33) there is a chamber (34) for transferring the ionizing energy, there being windings (35) outside said duct (33) which are made of copper wire, the terminal of which is soldered to said cable (33), said windings (35) affecting only partially the length of said chamber (34) and being covered by an insulating layer of lead (36) which wraps around them completely, magnets (38) being present in the space that lies between the domes (37a, 37b) for closing said chamber (34).

12. The device (1) according to one or more of the preceding claims, **characterized in that** it comprises a flange (39), which is arranged in a cascade arrangement with respect to said duct (33) of said amplifier element or tube (32), said flange being composed of two bodies (39a, 39b), which can be fastened to each other by means of adapted screws or bolts (40), each of which is provided internally with a seat (41a, 41b) for a complementarily-shaped partition (42) which is provided with a plurality of holes (43) and is subjected to a series of appropriate vibrational frequencies.

## Patentansprüche

1. Eine Vorrichtung (1) zum Speichern elektromagnetischer Energie und Erzeugen ionisierender Energie, die mit einem kastenartigen Einschluss- und Schutzgehäuse (2) ausgestattet ist, welches Aufnahmemittel (3) und Mittel (4) zur Verstärkung elektromagnetischer Energie umfasst, wobei Mittel (5) zum Speichern der Energie, die von den darunter liegenden Aufnahmemitteln (3) und Verstärkungsmitteln (4) aufsteigt, oberhalb der Aufnahmemittel (3) und der Verstärkungsmittel (4) vorhanden und damit verbunden sind; wobei die Speicherungsmittel (5) mit Mitteln (6) zum Umwandeln der elektromagnetischen Energie in ionisierende Energie verbunden sind, die ausgebildet sind, um die erzeugte ionisierende Energie an die Außenseite des kastenartigen Gehäuses (2) abzugeben; **dadurch gekennzeichnet, dass** die Aufnahmemittel (3) eine Kammer erster Scheiben (8) umfassen, die auf dem Boden des Gehäuses (2) angeordnet ist; und dadurch, dass sie mit Mitteln (31) zum Transportieren der ionisierenden Energie ausgestattet ist, die mindestens einen Zylinder (32) umfassen, welcher sich außerhalb des Gehäuses (2) befindet und in welchem zu verarbeitende Fluide strömen; wobei die Mittel (31) zum Transportieren der ionisierenden Energie mit dem Gehäuse (2) durch ein Kabel (30) verbunden sind, wobei das Gehäuse (2) eine Linse (13) umfasst, die oberhalb der Verstärkungsmittel (4) liegt.

2. Die Vorrichtung (1) gemäß Anspruch 1, **dadurch gekennzeichnet, dass** die Aufnahmemittel (3) unterhalb der Verstärkungsmittel (4) angeordnet sind und aus einer Kammer bestehen, welche aus einer Vielzahl erster Scheiben (8) besteht, die übereinandergelegt und gestapelt sind, wobei die ersten Scheiben (8) in eine Reihe von Spiralen (9) eingewickelt sind, jede durch einen flachen Kupferstreifen gebildet, wobei die Spiralen (9) auf Röhrenleitungen (51) aufliegen.

3. Die Vorrichtung (1) gemäß einem oder mehreren der obigen Ansprüche, **dadurch gekennzeichnet, dass** die Verstärkungsmittel (4) eine vierflächige Verstärkungskammer umfassen, die ein Verstärkerelement enthält, das konstruiert ist, um die eingehende Energie zu reflektieren und zu verstärken.

4. Die Vorrichtung (1) gemäß einem oder mehreren der obigen Ansprüche, **dadurch gekennzeichnet, dass** ein zentraler zylindrischer Kanal (10) aus Kupfer und eingewickelt in eine Spirale (12), ebenfalls aus Kupfer, mit einer kompakten Wicklung, die die gesamte Außenfläche des zentralen zylindrischen Kanals (10) bedeckt, oberhalb der Verstärkungsmittel (4) angeordnet ist.

5. Die Vorrichtung (1) gemäß einem oder mehreren der obigen Ansprüche, **dadurch gekennzeichnet, dass** das Gehäuse (2) durch einen Deckel (11) verschlossen ist, der aus durchsichtigem Kunststoffmaterial besteht und eine Linse (13) umfasst, die in einem Bereich angeordnet ist, der oberhalb der Verstärkungsmittel (4) liegt, wobei die Linse (13) die Photonen konzentriert und durch den darunter liegenden zentralen zylindrischen Kanal (10) an den Verstärkungsmitteln (4) kanalisiert, so dass die von ihnen verstärkte Energie an die Mittel (5) übertragen wird.

6. Die Vorrichtung (1) gemäß einem oder mehreren der obigen Ansprüche, **dadurch gekennzeichnet, dass** die Speicherungsmittel (5) aus einer Vielzahl röhrenförmiger Körper (14) aus Stahl bestehen, die nebeneinander und auf einer oder mehreren übereinander liegenden Ebenen angeordnet sind, wobei jeder der röhrenförmigen Körper (14) aus einem Zwei-Kammer-Außengehäuse besteht, das ausgebildet ist, um einen ersten inneren Sitz (15) für einen Kupferdraht (16) zu bilden, der über fast die gesamte Höhe des ersten Sitzes (15) daran gewickelt ist; wobei jeder der röhrenförmigen Körper (14) einen zweiten axialen Sitz (17) für eine Doppelkonusspirale (18a, 18b) aus Kupfer hat, die einander gegenüber angeordnet und durch ein Abstandselement (19) getrennt sind, wobei die röhrenförmigen Körper (14) außen durch einen flachen Kupferstreifen (20) geschnitten werden, wobei sich außerhalb jedes der röhrenförmigen Körper (14) ein flacher Kupferstreifen (21) befindet, der in einem Winkel zu den röhrenförmigen Körpern (14) angeordnet ist, wobei die flachen Kupferstreifen (20 und 21) es ermöglichen, eine größere Menge an ionisierender Energie zu speichern.

7. Die Vorrichtung (1) gemäß einem oder mehreren der obigen Ansprüche, **dadurch gekennzeichnet, dass** die Energie von den Speicherungsmitteln (5) an die Umwandlungsmittel (6) über geeignete Gewindestäbe (22) übertragen wird, die unten auf einer Schicht Blei (50) aufliegen, welche auf dem Boden (23) des Gehäuses (2) liegt, und sich nach oben bis zu den Umwandlungsmitteln (6) erstrecken; wobei die Röhrenleitungen (51) in die Reihe von Spiralen (9) eingewickelt sind; wobei die Schicht Blei (50) sich von dem Boden (23) nach oben erstreckt, um die Aufnahmemittel (3), die Verstärkungsmittel (4), die Speicherungsmittel (5) und die Umwandlungsmittel (6) vollständig einzuschließen und unterhalb der Linse (13) zu enden.

8. Die Vorrichtung (1) gemäß einem oder mehreren der obigen Ansprüche, **dadurch gekennzeichnet, dass** die Umwandlungsmittel (6) aus einem offenen Ring (24) bestehen, auf den Kupferspiralen (25) koaxial eingesetzt und oberhalb des offenen Rings (24) durch eine metallische Ringstruktur (26) abgedeckt sind; wobei die Umwandlungsmittel (6), die Verstärkungsmittel (4) und die Speicherungsmittel (5) voneinander durch geeignete zweite kreisförmige Scheiben (27a, 27b, 27c) getrennt sind; wobei die Aufnahmemittel (3) auf einer weiteren zweiten Scheibe (27d) aufliegen, die ähnlich den vorhergenannten ist, und so von dem Boden (23) beabstandet gehalten wird; wobei alle zweiten Scheiben (27a, 27b, 27c, 27d) perforiert sind, um das Hindurchführen der Stangen (22) zu ermöglichen.

9. Die Vorrichtung (1) gemäß einem oder mehreren der obigen Ansprüche, **dadurch gekennzeichnet, dass** sie röhrenförmige Stangen oder Kanäle (28) umfasst, die koaxial zu dem zentralen zylindrischen Kanal (10) auf einem Umfang angeordnet sind, der innerhalb desjenigen liegt, auf welchem der offene Ring (24) und die metallische Ringstruktur (26) liegen; wobei die röhrenförmigen Stangen oder Kanäle (28) eine Ausdehnung haben, die ausreicht, um sie mit den zweiten Scheiben (27a, 27b, 27c) abzudecken, wobei jede/jeder von ihnen in eine weitere Kupferspirale (29) eingewickelt ist.

10. Die Vorrichtung (1) gemäß einem oder mehreren der obigen Ansprüche, **dadurch gekennzeichnet, dass** ein Stromkabel (30) an die Enden des offenen Rings (24) angeschlossen ist, um die erzeugte ionisierende Energie an die Außenseite des kastenartigen Gehäuses (2) an Mittel (31) zur Übertragung der ionisierenden Energie abzugeben, die aus einem Verstärkerelement oder einer Röhre (32) bestehen, die zylindrisch ist und axial zu der sich eine Röhrenleitung (33) befindet, die ausgebildet ist, um das Hindurchströmen von Fluiden oder Flüssigkeiten zu ermöglichen; wobei das Kabel (30) durch Verbindung zweier Drähte hergestellt wird, die jeweils mit einem Ende des offenen Rings (24) verbunden sind.

11. Die Vorrichtung (1) gemäß einem oder mehreren der obigen Ansprüche, **dadurch gekennzeichnet, dass** sich zwischen dem Verstärkerelement (32) und der Röhrenleitung (33) eine Kammer (34) zur Übertragung der ionisierenden Energie befindet, wobei es außerhalb der Röhrenleitung (33) Wicklungen (35) gibt, die aus Kupferdraht hergestellt sind und deren Anschlussklemme mit dem Kabel (33) verlötet ist, wobei die Wicklungen (35) die Länge der Kammer (34) nur teilweise beeinflussen und von einer Isolierschicht (36) aus Blei bedeckt sind, die sie vollständig umgibt, wobei sich Magneten (38) in dem Raum befinden, der zwischen den Hauben (37a, 37b) zum Verschließen der Kammer (34) liegt.

12. Die Vorrichtung (1) gemäß einem oder mehreren der obigen Ansprüche, **dadurch gekennzeichnet, dass** sie einen Flansch (39) umfasst, der in einer Kaskadenanordnung im Verhältnis zu der Röhrenleitung (33) des Verstärkerelements oder Zylinders (32) angeordnet ist, wobei der Flansch aus zwei Körpern (39a, 39b) besteht, die durch geeignete Schrauben oder Bolzen (40) aneinander befestigt werden können und die innen jeweils mit einem Sitz (41a, 41b) für eine komplementär geformte Trennwand (42) ausgestattet sind, welche mit einer Vielzahl von Löchern (43) versehen ist und einer Reihe passender Schwingungsfrequenzen ausgesetzt wird.

## Revendications

1. Dispositif (1) pour accumuler de l'énergie électromagnétique et générer de l'énergie ionisante, qui est pourvu d'une enceinte de confinement et de protection analogue à un caisson (2) comportant des moyens de réception (3) et des moyens d'amplification d'énergie électromagnétique (4), des moyens (5) d'accumulation de l'énergie qui provient desdits moyens de réception (3) et moyens d'amplification (4) sous-jacents étant présents au-dessus desdits moyens de réception (3) et desdits moyens d'amplification (4) et étant associés à ceux-ci, lesdits moyens d'accumulation (5) étant reliés à des moyens (6) pour convertir l'énergie électromagnétique en énergie ionisante, qui sont adaptés pour libérer à l'extérieur de ladite enceinte analogue à un caisson (2) ladite énergie ionisante générée, **caractérisé en ce que** lesdits moyens de réception (3) comportent une chambre de premiers disques (8) qui est agencée à la base de ladite enceinte (2) et **en ce qu'**elle est pourvue de moyens (31) pour transporter ladite énergie ionisante, qui comportent au moins un tube (32), qui est à l'extérieur de ladite enceinte (2) et à l'intérieur duquel passent des fluides à traiter, lesdits moyens (31) de transport de ladite énergie ionisante étant reliés à ladite enceinte (2) au moyen d'un câble (30), ladite enceinte (2) comportant une lentille (13) qui se situe au-dessus desdits moyens d'amplification (4).

2. Dispositif (1) selon la revendication 1, **caractérisé en ce que** lesdits moyens de réception (3) sont agencés sous lesdits moyens d'amplification (4) et sont constitués d'une chambre composée d'une pluralité de premiers disques (8), qui sont mutuellement superposés et empilés, lesdits premiers disques (8) étant enveloppés d'une série de spirales (9), chacune étant fournie au moyen d'une bande de cuivre plate, lesdites spirales (9) reposant sur des conduites (51).

3. Dispositif (1) selon une ou plusieurs des revendications précédentes, **caractérisé en ce que** lesdits moyens d'amplification (4) comportent une chambre d'amplificateur tétraédrique qui contient un élément amplificateur conçu pour réfléchir et amplifier l'énergie entrante.

4. Dispositif (1) selon une ou plusieurs des revendications précédentes, **caractérisé en ce qu'**un canal cylindrique central (10) en cuivre et enveloppé d'une spirale (12), également en cuivre, un enveloppement compact qui recouvre la surface extérieure complète dudit canal cylindrique central (10) étant agencé au-dessus desdits moyens d'amplification (4).

5. Dispositif (1) selon une ou plusieurs des revendications précédentes, **caractérisé en ce que** ladite enceinte (2) est fermée par un couvercle (11) en matière plastique transparente et comportant une lentille (13) qui est agencée dans une zone qui se situe au-dessus desdits moyens d'amplification (4), ladite lentille (13) concentrant les photons et les canalisant, à travers ledit canal cylindrique central sous-jacent (10), au niveau desdits moyens d'amplification (4) de sorte que l'énergie amplifiée par eux est transportée jusqu'auxdits moyens (5) .

6. Dispositif (1) selon une ou plusieurs des revendications précédentes, **caractérisé en ce que** lesdits moyens d'accumulation (5) sont constitués d'une pluralité de corps tubulaires (14) en acier, qui sont agencés mutuellement côte à côte et sur un ou plusieurs plans mutuellement sus-jacents, chacun desdits corps tubulaires (14) étant composé d'une enceinte externe à deux chambres, qui est adaptée pour former un premier logement interne (15) pour un fil de cuivre (16) enroulé sur celui-ci sur la quasi-totalité de la hauteur dudit premier logement (15), chacun desdits corps tubulaires (14) ayant un second logement axial (17) pour une double spirale conique (18a, 18b) en cuivre, qui sont agencés mutuellement opposées et sont divisés par un organe d'espacement (19), lesdits corps tubulaires (14) étant croisés extérieurement par une bande de cuivre plate (20), à l'extérieur de chacun desdits corps tubulaires (14) étant agencée une bande de cuivre plate (21) à un angle par rapport auxdits corps tubulaires (14), lesdites bandes de cuivre plates (20 et 21) permettant d'accumuler une plus grande quantité d'énergie ionisante.

7. Dispositif (1) selon une ou plusieurs des revendications précédentes, **caractérisé en ce que** l'énergie est transportée à partir desdits moyens d'accumulation (5) jusqu'auxdits moyens de conversion (6) via des barres filetées (22) adaptées qui reposent dans une zone vers le bas sur une couche de plomb (50) qui est en appui sur le fond (23) de ladite enceinte (2) et s'étendent jusqu'auxdits moyens de conversion (6), lesdites conduites (51) étant enveloppées par ladite série de spirales (9), ladite couche de plomb (50) s'étendant à partir dudit fond (23) vers le haut de manière à envelopper entièrement lesdits moyens de réception (3), lesdits moyens d'amplification (4), lesdits moyens d'accumulation (5) et lesdits moyens de conversion (6), en s'arrêtant sous ladite lentille (13).

8. Dispositif (1) selon une ou plusieurs des revendications précédentes, **caractérisé en ce que** lesdits moyens de conversion (6) sont constitués d'un anneau ouvert (24) sur lequel des spirales en cuivre (25) sont insérées coaxialement et sont couplés, au-dessus dudit anneau ouvert (24), par une structure annulaire métallique (26), lesdits moyens de conversion (6), lesdits moyens d'amplification (4) et lesdits moyens d'accumulation (5) étant mutuellement séparés par des seconds disques circulaire (27a, 27b, 27c) adaptés, lesdits moyens de réception (3) reposant sur un second disque supplémentaire (27d), qui est similaire aux précédents, et étant ainsi maintenus espacés dudit fond (23), tous lesdits seconds disques (27a, 27b, 27c, 27d) étant perforés afin de permettre le passage desdites barres (22).

9. Dispositif (1) selon une ou plusieurs des revendications précédentes, **caractérisé en ce qu'**il comporte des montants ou canaux tubulaires (28), qui sont agencés coaxialement audit canal cylindrique central (10) sur une circonférence qui est interne à celle sur laquelle ledit anneau ouvert (24) et ladite structure annulaire métallique (26) se situent, lesdits montants ou canaux tubulaires (28) ayant une extension qui est suffisante pour les coupler auxdits seconds disques (27a, 27b, 27c), chacun d'eux étant enveloppé par une spirale (29) supplémentaire en cuivre.

10. Dispositif (1) selon une ou plusieurs des revendications précédentes, **caractérisé en ce qu'**un câble électrique (30) est raccordé aux extrémités dudit anneau ouvert (24) pour la libération à l'extérieur de ladite enceinte analogue à un caisson (2) de l'énergie ionisante générée au niveau de moyens (31) de transport de ladite énergie ionisante, qui sont constitués d'un élément ou tube amplificateur (32) qui est cylindrique et dans l'axe duquel il y a une conduite (33) qui est adaptée pour permettre le passage de fluides ou de liquides, ledit câble (30) étant obtenu en assemblant deux fils, chacun étant relié à une extrémité dudit anneau ouvert (24).

11. Dispositif (1) selon une ou plusieurs des revendications précédentes, **caractérisé en ce qu'**entre ledit élément amplificateur (32) et ladite conduite (33), il existe une chambre (34) pour transférer l'énergie ionisante, des enroulements (35) étant agencés à l'extérieur de ladite conduite (33) qui sont constitués de fil de cuivre, dont la borne est soudée audit câble (33), lesdits enroulements (35) affectant uniquement partiellement la longueur de ladite chambre (34) et étant recouverts d'une couche isolante en plomb (36) qui les enveloppe entièrement, des aimants (38) étant présents dans l'espace qui se situe entre les dômes (37a, 37b) pour fermer ladite chambre (34).

12. Dispositif (1) selon une ou plusieurs des revendications précédentes, **caractérisé en ce qu'**il comporte une bride (39), qui est agencée dans un agencement en cascade par rapport à ladite conduite (33) dudit élément ou tube amplificateur (32), ladite bride étant composée de deux corps (39a, 39b), qui peuvent être fixés l'un à l'autre au moyen de vis ou de boulons (40) adaptés, dont chacun est intérieurement pourvu d'un logement (41a, 41b) pour une cloison formée de manière complémentaire (42) qui est pourvue d'une pluralité de trous (43) et est soumise à une série de fréquences vibratoires appropriées.
